# EUROPÄISCHE PATENTSCHRIFT

(11) **EP 3 632 974 B1**
(45) Veröffentlichungstag und Bekanntmachung des Hinweises auf die Patenterteilung: **19.07.2023**
(21) Anmeldenummer: 18198798.3
(22) Anmeldetag: 05.10.2018
(51) Int. Cl.: C08L 7/00, C08L 9/00, C08L 21/00

(54) **VERFAHREN ZUR HERSTELLUNG EINER FÜLLSTOFF-HALTIGEN KAUTSCHUKMISCHUNG**
METHOD FOR PRODUCING A RUBBER COMPOUND CONTAINING FILLER
PROCÉDÉ DE FABRICATION D'UN MÉLANGE DE CAOUTCHOUC CONTENANT UNE CHARGE

(43) Veröffentlichungstag der Anmeldung: 08.04.2020
(73) Patentinhaber: Continental Reifen Deutschland GmbH, 30165 Hannover (DE)
(72) Erfinder: Rennmann, Tim, 30177 Hannover (DE); Glöckner, Andreas, 30823 Garbsen (DE)
(74) Vertreter: Continental Corporation

(56) Entgegenhaltungen:
- EP-A1- 2 787 037
- EP-A1- 3 192 825
- US-A- 3 658 752

## Beschreibung

Die Erfindung betrifft ein Verfahren zur Herstellung einer Füllstoff-haltigen Kautschukmischung.

Es ist bekannt, dass in technischen Gummiartikeln, wie Fahrzeugreifen, Kautschukmischungen eingesetzt werden, die wenigstens einen Füllstoff enthalten, um die Mischung zu verstärken und abriebfester auszugestalten. Hierbei spielt eine ausreichende Dispersion der Füllstoffe eine wichtige Rolle, um die gewünschten Eigenschaften zu erzielen.

Es ist ferner bekannt, dass in den Kautschukmischungen Kautschuke, also Polymere eingesetzt werden, deren Polymerkettenlänge die Eigenschaften der Kautschukmischung beeinflussen, insbesondere das Rollwiderstandsverhalten.

Bei herkömmlichen Mischverfahren werden durch die Verteilung der Füllstoffe im Kautschuk und der dabei auftretenden Scherkräfte hohe Temperaturen erzielt, die einen Abbau der Polymerketten verursachen können. Dies kann sich dann negativ auf die Hysterese und damit das Rollwiderstandsverhalten der Kautschukmischung auswirken.

Die EP 2 787 037 offenbart eine Kautschukmischung, durch die ein gummielastischer Körper mit sowohl ausgezeichnetem niedrigem Rollwiderstand und Nassgleitwiderstand als auch mit ausgezeichneter mechanischer Festigkeit und Verschleißfestigkeit erhalten werden kann. Die Kautschukzusammensetzung umfasst ein Blockcopolymer (A) und ein spezifisches Polymer (B), das von dem Copolymer (A) verschieden ist, und einen Füllstoff (C). Das Blockcopolymer (A) umfasst zwei Blöcke aus einem konjugierten Dien oder einem Dien und einem aromatischen Vinyl und weist zwei Glasübergangstemperaturen auf. Der Füllstoff kann beispielsweise Kieselsäure oder Ruß umfassen.

Die EP 3 192 825 beschreibt ferner die Herstellung eines Ligninderivats, das aus Biomasse gewonnen wird und zur Gummiverstärkung oder zur Verwendung in einem Formmaterial verwendet wird. Ein solches Ligninderivat wird in der EP 3 192 825 zur Herstellung einer Gummimischung eingesetzt, wobei der dem Ligninderivat zunächst mit einem Harz vermischt wird, um gemischtes Harz zu erhalten. Diese wird als nächstes mit einem Kautschukmaterial und optionalen Komponenten in einer Knetmaschine geknetet. In einem dritten Schritt wird der Zusammensetzung ein Vulkanisationsmittel und ein Beschleuniger hinzugefügt.

In der US 3 658 752 wird weiterhin ein Verfahren zur Herstellung einer stabilen Mischung aus einem Elastomer und einem Kunststoff offenbart. Die US 3 658 752 beschreibt hierzu ein einstufiges Verfahren, bei dem das Elastomer, der Thermoplast und ein fein verteilter verstärkender teilchenförmiger Füllstoff bei einer Temperatur oberhalb des Erweichungspunkts des Thermoplasten und unterhalb der Zersetzungstemperaturen des Kunststoffs und des Elastomers zusammen vermischt werden.

Der vorliegenden Erfindung liegt die Aufgabe zugrunde, ein Verfahren zur Herstellung einer Füllstoff-haltigen Kautschukmischung mit einer Gesamtfüllstoffmenge bereitzustellen, bei dem eine gute Füllstoffdispersion erzielt wird, aber gleichzeitig der Abbau von Polymerketten verringert wird. Mit dem Verfahren soll damit der Zielkonflikt aus den beiden Effekten möglichst gut entkoppelt werden.

Gelöst wird die Aufgabe erfindungsgemäß durch das Verfahren nach Anspruch 1. Ein weiterer Gegenstand der Erfindung ist eine Füllstoff-haltige Kautschukmischung, die durch das erfindungsgemäße Verfahren hergestellt ist.

Dadurch, dass der Kautschuk A, in dem der Füllstoff verteilt werden soll, zunächst in zwei Komponenten aufgeteilt wird und in einer Komponente die Hauptfüllstoffmenge zugegeben wird (Schritt b)), werden gleichzeitig die Polymerketten des Kautschuks der zweiten Komponente vor den Scherkräften und damit hohen Temperaturen geschützt. In der zweiten Komponente wird nämlich eine deutlich geringere Füllstoffmenge oder gar kein Füllstoff verteilt (Schritt d)) Eine spätere Verteilung und Homogenisierung der beiden Kautschukkomponenten erfolgt in Schritt h), wobei hierzu je nach Gesamtmischungszusammensetzung der Schritt f), nämlich das Vorwärmen der höher gefüllten Komponente durchgeführt wird.

Mit dem erfindungsgemäßen Verfahren wird somit eine gute Dispersion von Füllstoffen in einer Kautschukmatrix eines Kautschuks A bei gleichzeitig geringem Polymerkettenabbau erzielt.

Dabei ist wesentlich, dass in beiden Komponenten der gleiche Kautschuk (Kautschuk A) vorhanden ist. Ein inhomogenes System aus verschiedenen Kautschukphasen, wie beispielsweise in der EP 0763558 B1 oder der EP 2233317 B1 beschrieben, soll mit der vorliegenden Erfindung vordergründig nicht erzielt werden.

Der Kautschuk A in den Schritten a) bis d) ist bevorzugt ein Dienkautschuk.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der Dienkautschuk ist dabei bevorzugt ausgewählt aus der Gruppe bestehend aus natürlichem Polyisopren und/oder synthetischem Polyisopren und/oder epoxidiertem Polyisopren und/oder Butadien-Kautschuk und/oder Butadien-Isopren-Kautschuk und/oder lösungspolymerisiertem Styrol-Butadien-Kautschuk und/oder emulsionspolymerisiertem Styrol-Butadien-Kautschuk und/oder Styrol-Isopren-Kautschuk und/oder Flüssigkautschuken mit einem Molekulargewicht M_{w} von größer als 20000 g/mol und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydriertem AcrylnitrilbutadienKautschuk und/oder hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz.

Vorzugsweise ist der Dienkautschuk ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR), emulsionspolymerisiertem Styrol-Butadien-Kautschuk (ESBR), Butylkautschuk (IIR) und Halobutylkautschuk. Die hergestellte Kautschukmischung ist damit insbesondere für Fahrzeugreifen geeignet.

Gemäß besonders vorteilhaften Ausführungsformen der Erfindung ist der Dienkautschuk ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR).

Gemäß einer ganz besonders vorteilhaften Ausführungsform der Erfindung ist der Kautschuk A natürliches Polyisopren (NR; Naturkautschuk).

Insbesondere bei NR wirkt sich aufgrund der im Ursprungszustand langen Polymerketten der Abbau stark auf die Eigenschaften aus. Es ist mit der vorliegenden Erfindung damit möglich, auch gefüllt NR-Mischungen mit sehr guten Eigenschaften Polymer-schonend herzustellen.

Wie oben ausgeführt geht es bei der vorliegenden Erfindung darum, Füllstoff(e) in einer Kautschukmatrix aus einem Kautschuktypen, d. h. z. B NR, möglichst homogen zu verteilen. Unter "Kautschuk A" wird dabei genau ein Kautschuktyp ausgewählt aus unterschiedlichen Kautschuktypen, also NR oder IR oder BR oder SSBR etc. verstanden.

Dabei kann dieser Kautschuk A, der in den Schritten a) und c) bzw. b) und d) in separierten Komponenten bereitgestellt wird, gemäß einer vorteilhaften Ausführungsform der Erfindung der einzige Kautschuk bzw. der einzige Kautschuktyp sein, der in der mit dem erfindungsgemäßen Verfahren hergestellten Kautschukmischung vorhanden ist. Gemäß dieser Ausführungsform stellt die Menge des Kautschuks A dann definitionsgemäß 100 phr an in der hergestellten Kautschukmischung vorhandenem Kautschuk dar.

Die in dieser Schrift verwendete Angabe phr (parts per hundred parts of rubber by weight) ist dabei die in der Kautschukindustrie übliche Mengenangabe für Mischungsrezepturen. 100 phr bedeuten hier 100 Gew.-% aller in der hergestellten Kautschukmischung vorhandenen Kautschuke.

Es ist gemäß einer weiteren vorteilhaften Ausführungsform der Erfindung aber auch denkbar, dass der Kautschukmischung bei dem erfindungsgemäßen Verfahren, insbesondere in den Schritten b) und/oder d) und/oder h), bevorzugt b) und/oder d), wenigstens ein weiterer Kautschuk B, bevorzugt wenigstens ein Dienkautschuk, besonders bevorzugt natürliches Polyisopren (NR), synthetisches Polyisopren (IR), Butadien-Kautschuk (BR), lösungspolymerisierter Styrol-Butadien-Kautschuk (SSBR) und/oder emulsionspolymerisierter Styrol-Butadien-Kautschuk (ESBR) zugegeben wird, wobei sich der Kautschuk B dann von dem Kautschuk A unterscheidet.

Damit wird die erfindungsgemäße Aufgabe weiterhin gelöst, da wesentlich ist, dass der Kautschuk A auf zwei separate Komponenten mit unterschiedlicher Füllstoffmenge aufgeteilt wird. Gleichzeitig ist es über einen zusätzlichen Kautschuk B aber möglich weitere Eigenschaften der hergestellten Kautschukmischung zu beeinflussen. Falls wenigstens ein weiterer Kautschuk B zugegeben wird, beträgt die Menge bevorzugt 1 bis 30 phr, besonders bevorzugt 5 bis 30 phr, wiederum bevorzugt 5 bis 20 phr, wobei 100 phr dann definitionsgemäß die Gesamtmenge an in der hergestellten Kautschukmischung enthaltenen Kautschuke ist, also die Summe der Mengen an Kautschuk A und Kautschuk(en) B.

Beispielsweise können beim erfindungsgemäßen Verfahren insgesamt 85 phr NR als Kautschuk A und 15 phr BR als Kautschuk B zugegeben werden, wobei die 85 phr NR dann gemäß den Schritten a) bis d) auf die Komponenten mit unterschiedlicher Füllstoffmenge aufgeteilt werden.

Für eine gute Füllstoffdispersion ist es vorteilhaft, wenn die erste Kautschukmischungskomponente 25 bis 75 phr, bevorzugt 45 bis 75 phr, des Kautschuks A umfasst.

Bei dem Füllstoff kann es sich prinzipiell um alle dem Fachmann bekannten Füllstoffe für Kautschukmischungen handeln. Gemäß vorteilhafter Ausführungsformen der Erfindung ist der Füllstoff ein verstärkender Füllstoff, der bevorzugt ausgewählt ist aus der Gruppe bestehend aus Rußen und Kieselsäuren.

Bei der Kieselsäure kann es sich um die dem Fachmann bekannten Kieselsäuretypen, die als Füllstoff für Reifenkautschukmischungen geeignet sind, handeln, wie insbesondere Fällungskieselsäuren.

Beispielsweise kann eine fein verteilte, gefällte Kieselsäure verwendet werden, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 85 bis 320 m²/g und ganz besonders bevorzugt von 120 bis 235 m²/g, und eine CTAB-Oberfläche (gemäß ASTM D 3765) von 30 bis 400 m²/g, bevorzugt von 30 bis 330 m²/g, besonders bevorzugt von 80 bis 300 m²/g und ganz besonders bevorzugt von 115 bis 200 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch hoch dispergierbare Kieselsäuren, so genannte HD-Kieselsäuren (z. B. Zeosil^{®} 1165 MP der Firma Solvay), zum Einsatz kommen.

Die Begriffe "Kieselsäure" und "Silika" werden im Rahmen der vorliegenden Erfindung synonym verwendet.

Als Ruße kommen alle der fachkundigen Person bekannten Rußtypen in Frage, wie insbesondere die "ASTM-Ruße" nach ASTM D 1765.

In einer Ausführungsform hat der Ruß eine Jodzahl, gemäß ASTM D 1510, die auch als Jodadsorptionszahl bezeichnet wird, zwischen 30 und 250 g/kg, bevorzugt 30 bis 180 g/kg, besonders bevorzugt 40 bis 180 g/kg, und ganz besonders bevorzugt 40 bis 130 g/kg, und eine DBP-Zahl gemäß ASTM D 2414 von 30 bis 200 ml/100 g, bevorzugt 70 bis 200 ml/100g, besonders bevorzugt 90 bis 200 ml/100g.

Die DBP-Zahl gemäß ASTM D 2414 bestimmt das spezifische Absorptionsvolumen eines Rußes mittels Dibutylphthalat.

Gemäß einer vorteilhaften Ausführungsform der Erfindung wird ein Füllstofftyp verwendet, also z. B. Ruß oder Kieselsäure.

Gemäß einer weiteren vorteilhaften Ausführungsform der Erfindung setzt sich die Gesamtfüllstoffmenge aus Ruß und Kieselsäure zusammen.

Weitere nicht verstärkende Füllstoffe sind beispielsweise Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filier".

Zinkoxid gehört im Rahmen der vorliegenden Erfindung nicht zu den Füllstoffen.

Bei dem erfindungsgemäßen Verfahren kann die Gesamtfüllstoffmenge auf die beiden Kautschukmischungskomponenten (erste und zweite) aufgeteilt werden, muss es aber nicht.

Gemäß einer vorteilhaften Ausführungsform der Erfindung werden in Schritt b) 100 Gew.-% der Füllstoffmenge verwendet, womit in Schritt d) 0 Gew.-% der Füllstoffmenge verwendet werden. Der gesamte Füllstoff wird damit im Kautschuk A in der ersten Kautschukmischungskomponente verteilt. Damit umfasst die zweite Kautschukmischungskomponente in dieser Ausführungsform keinen Füllstoff, aber ggf. andere Bestandteile, wie Zusatzstoffe, die unten näher ausgeführt werden.

Hierdurch werden die Dosierung der insgesamt vorhandenen Füllstoffe und das erfindungsgemäße Verfahren erleichtert, da nicht separate Füllstoffmengen abgewogen und zugegeben werden müssen.

Gleichzeitig werden die Polymerketten des Kautschuks A der zweiten Mischungskomponenten vor jeglichen Scherkräften durch Füllstoffe geschützt.

Gemäß einer weiteren vorteilhaften Ausführungsform der Erfindung werden in Schritt b) 60 bis 99 Gew.-%, bevorzugt 60 bis 90 Gew.-%, besonders bevorzugt 60 bis 80 Gew.-%, der Füllstoffmenge verwendet. Hierbei beträgt dann die Füllstoffmenge in Schritt d) in der zweiten Kautschukmischungskomponente entsprechend 1 bis 40 Gew.-%, bevorzugt 10 bis 40 Gew.-%, besonders bevorzugt 20 bis 40 Gew.-%.

Mit dieser beschriebenen Ausführungsform wird in der ersten Komponente eine gute Dispersion erzielt und in der zweiten Komponente das Polymer möglichst gut vor einem Kettenabbau geschützt, wobei gleichzeitig eine gute Verstärkung durch den restlichen Anteil des Füllstoffs in der zweiten Komponente erzielt wird.

Der Verfahrensschritt b) kann im Rahmen einer einzigen Mischstufe oder in mehreren Mischstufen erfolgen, bei der insbesondere die Füllstoffmenge nach und nach zu dosiert wird.

Erfolgt Schritt b) in einer einzigen Mischstufe unter Zugabe der Füllstoffmenge, so kann auch eine weitere Durchmischung (engl. "Remill") durchgeführt werden.

Bei dem erfindungsgemäßen Verfahren können der Kautschukmischung weitere Zusatzstoffe zugegeben werden.

Zu diesen Zusatzstoffen zählen
a) Alterungsschutzmittel, wie die der Familie der PPD (Phenylendiamine) und dabei z. B. N-Phenyl-N'-(1,3-dimethylbutyl)-p-phenylendiamin (6PPD), N,N`-Diphenyl-p-phenylendiamin (DPPD), N,N`-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Wachse,
d) Kohlenwasserstoffharze, wie ggf. insbesondere Klebharze
e) Mastikationshilfsmittel, wie z. B. 2,2'-Dibenzamidodiphenyldisulfid (DBD) und
f) Prozesshilfsmittel, wie insbesondere Fettsäureester und Metallseifen, wie z.B. Zinkseifen und/oder Calciumseifen,
g) Weichmacher, und
h) Kupplungsagenzien für Füllstoffe, wie insbesondere Silan-Kupplungsagenzien für die Anbindung von Kieselsäure oder Agenzien für die Anbindung von Füllstoffen wie Ruß, beispielsweise die in der EP 2589619 A1 offenbarte Verbindung S-(3-Aminopropyl)Thioschwefelsäure und/oder deren Metallsalze.

Die genannten Zusatzstoffe können bei dem erfindungsgemäßen Verfahren der ersten und/oder der zweiten Kautschukmischungskomponente oder in einem späteren separaten Verfahrensschritt zugegeben werden.

Gemäß einer vorteilhaften Ausführungsform der Erfindung werden ein Füllstoff(typ) und eines oder mehrere für diesen Füllstoff(typen) geeignete Kupplungsagenzien im gleichen Verfahrensschritt zugegeben.

Beispielsweise werden Kieselsäure und Silan-Kupplungsagenz(ien) beide in Schritt b) oder beide in Schritt d) oder beide in Schritt b) und d) zugegeben.

Bei den Silan-Kupplungsagenzien kann es sich um alle dem Fachmann bekannten Typen handeln.

Ferner können ein oder mehrere verschiedene Silan-Kupplungsagenzien in Kombination miteinander eingesetzt werden. Die Kautschukmischung kann somit ein Gemisch verschiedener Silane enthalten.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung).

Aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sₓ- (mit x = 2 bis 8).

So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S^{®} der Firma Evonik) zugesetzt werden.

Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363^{®} von der Firma Evonik Industries vertrieben werden.

Durch die Wahl der Zugabe von Weichmachern und Prozesshilfsmitteln sowie Alterungsschutzmitteln und Wachsen kann - neben der Gesamtfüllstoffmenge und deren Verteilung auf die Komponenten - gesteuert werden, ob die erste höher gefüllte Kautschukmischungskomponente gemäß Schritt f) erwärmt werden sollte, bevor sie mit der zweiten Komponente gemäß Schritt h) vermischt wird.

Gleichzeitig sollte die Weichmachermenge in der ersten Mischungskomponente aber nicht zu hoch sein, sodass weiterhin Scherkräfte und eine gute Dispersion des Füllstoffs in der ersten Komponente gewährleistet ist.

Zu den Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Triglyceride, wie z. B. Rapsöl, oder Faktisse oder Kohlenwasserstoffharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden bei dem erfindungsgemäßen Verfahren zusätzlich Flüssig-Polymere als Weichmacher zugegeben, so gehen diese nicht als Kautschuk in die Berechnung der Zusammensetzung der Polymermatrix ein.

Der Weichmacher ist bevorzugt ausgewählt aus der Gruppe bestehend aus den oben genannten Weichmachern.

Der Weichmacher ist besonders bevorzugt ausgewählt aus der Gruppe bestehend aus Kohlenwasserstoffharzen, Flüssig-Polymeren und Mineralölen.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Wie oben ausgeführt, kann es vorteilhaft sein, wenn die erste höher gefüllte Kautschukmischungskomponente vor dem Vermischen mit der zweiten Kautschukmischungskomponente erwärmt wird. Dies ist insbesondere der Fall, wenn sich die Eigenschaften wie das Fließverhalten bzw. die Viskositäten der beiden Komponenten deutlich voneinander unterscheiden. Um dies zu objektivieren, kann die Mooney-Viskosität der Komponenten nach ASTM D1646; z.B. MS1+3 bei 100 °C, bestimmt werden. Ferner ist auch eine Messung über Hochkapillar-Viskosimetrie (HKV) vorteilhaft.

Beispielsweise ist ein Erwärmen gemäß Schritt f) der ersten Komponente dann vorteilhaft durchzuführen, wenn der Unterschied der Viskositäten beider Komponenten mehr als 35 Mooney-Einheiten bei der MS 1+3 bei 100 °C beträgt.

Dabei weist die höher gefüllte erste Komponente die größere Viskosität auf, sodass ihr Fließverhalten durch das Erwärmen an das Fließverhalten der zweiten Komponente angepasst wird.

Das Erwärmen der ersten Komponente, beispielsweise auf eine Temperatur von 70 bis 140 °C, bevorzugt 80 bis 140 °C, stellt dabei eine Kompatibilität der ersten Mischungskomponente zur zweiten Komponente her, sodass sich der Füllstoff dann aufgrund der angepassten Fließeigenschaften in der gesamten Matrix des Kautschuks A homogen verteilen kann.

Gemäß einer vorteilhaften Weiterbildung der Erfindung erfolgt das Erwärmen in Schritt f) durch intensives Durchmischen der ersten Kautschukmischungskomponente.

Es ist auch denkbar, dass das Erwärmen außerhalb einer Mischvorrichtung z. B. in einem Ofen erfolgt.

Es ist ebenfalls denkbar, dass die zweite Kautschukmischungskomponente erwärmt wird. Auch dies kann durch ein Durchmischen oder außerhalb z. B. in einem Ofen erfolgen. Die zweite Kautschukmischungskomponente wird dabei je nach ihrer Viskosität auf 30 bis 50 °C erwärmt.

Der Kautschukmischung kann bei dem erfindungsgemäßen Verfahren insbesondere ein Vulkanisationssystem zugegeben werden. Dies kann beispielsweise in Schritt h) erfolgen. Gemäß dieser Ausführungsform der Erfindung ist der Schritt h) die letzte Mischstufe der Kautschukmischung, welche auch als Fertigmischstufe bezeichnet wird.

Das Vulkanisationssystem kann aber auch zu einem späteren Zeitpunkt, also zeitlich nach Schritt h) in einem separaten Verfahrensschritt zugegeben werden. Hierbei stellt der Schritt h) dann eine reine Durchmischungsstufe dar, welche ohne die Aufteilung auf zwei Komponenten dem Fachmann auch als "Remill" bekannt ist.

Das Vulkanisationssystem ist insbesondere im Falle eines Dienkautschukes als Kautschuk A ein Schwefelvulkanisationssystem umfassend Schwefel und/oder Schwefelspender und/oder Vulkanisationsbeschleuniger, wobei einige Vulkanisationsbeschleuniger zugleich als Schwefelspender wirken können.

Dabei ist der Beschleuniger ausgewählt aus der Gruppe bestehend aus Thiazolbeschleunigem und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern und/oder Polyetheramin-Beschleunigern.

Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Als schwefelspendende Substanz können dabei alle dem Fachmann bekannten schwefelspendenden Substanzen verwendet werden. Die schwefelspendende Substanz ist bevorzugt ausgewählt aus der Gruppe enthaltend z. B. Thiuramdisulfide, wie z. B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z. B. Dipentamethylenthiuramtetrasulfid (DPTT), und/oder Dithiophosphate, wie z. B.

DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Die genannten Verfahrensschritte a) bis h) können in dem Fachmann bekannten Vorrichtungen durchgeführt werden.

Gemäß einer besonders vorteilhaften Ausführungsform der Erfindung wird das Verfahren in einer Aggregatkombination aus einem Stempelkneter und einem darunter angeordneten stempellosen Kneter durchgeführt, wobei die Schritte g) und h) in dem stempellosen Kneter stattfinden.

Die erste Kautschukmischungskomponente wird gemäß Schritt b) bevorzugt in dem oberen Stempelkneter hergestellt und dann in den unteren stempellosen Kneter geführt.

Bevorzugt weist dabei der stempellose Kneter ein Arbeitsvolumen auf, das um 70 bis 200 % größer ist als das des Stempelkneters.

Hierdurch weist die Aggregatkombination in den beiden Knetern eine optimale Volumenverteilung auf, welches mit dem erfindungsgemäßen Verfahren optimal ausgenutzt werden kann.

Die beschriebene Aggregatkombination ist beispielsweise in der DE 4407144 A1 offenbart.

Das Erwärmen der ersten Komponente gemäß Schritt f) kann nach einer bevorzugten Ausführungsform dadurch geschehen, dass die erste Komponente im unteren Kneter vorgelegt und somit vordurchmischt wird, bis sie eine entsprechende Temperatur bzw. das angepasst Fließverhalten aufweist.

Es ist aber auch denkbar, dass die erste Komponente außerhalb der Aggregatkombination erwärmt wird.

Wie oben beschrieben, können beim erfindungsgemäßen Verfahren zusätzliche Zusatzstoffe insbesondere in den Mischstufen gemäß der Schritte b) und/oder d) und/oder h) zugegeben werden. Weiterhin können zusätzliche Verfahrensschritte durchgeführt werden, wie beispielsweise und oben ausgeführt Schritt b) im Rahmen mehrerer Mischstufen oder eine Durchmischungsstufe im Anschluss an Schritt b).

Das Gleiche gilt analog für die anderen beschriebenen Mischstufen, insbesondere d) und h).

Die erfindungsgemäß hergestellte Kautschukmischung kann insbesondere für Fahrzeugreifen oder andere technische Gummiartikel, wie z. B. Gurte, Riemen oder Schläuche, verwendet werden.

Im Folgenden soll die Erfindung anhand von Ausführungsbeispielen erläutert werden, die in Tabelle 1 zusammengefasst sind. Bei den mit V gekennzeichneten Beispielen handelt es sich um Vergleichsbeispiele, während die mit E gekennzeichneten erfindungsgemäße Beispiele darstellen. Die Mengen sind in phr angegeben, wobei sich die Angabe auf 100 Gew.-% der Kautschuke in der Mischung nach allen Mischstufen bezieht.

Die Zusatzstoffe bestehen bei allen Mischungen aus Alterungsschutzmitteln, Weichmacher, Zinkoxid und Stearinsäure in jeweils üblichen Mengen. Die Mengen der jeweiligen Substanzen sind bei allen Mischungen gleich, d. h. von V1 bis E2 unverändert. Bei V1 wurde die Grundmischung in einer Mischstufe erzeugt, ohne dass eine Aufteilung in zwei Mischungskomponenten erfolgt ist.

Bei V2 wurde die Grundmischung wie V1 in einer Stufe hergestellt, wobei diese Stufe dann in einem weiteren Schritt (engl. "remill") nochmals ohne Zugabe weiterer Substanzen durchmischt wurde.

Bei E1 wurden die Bestandteile wie sie oben in der Tabelle unter der ersten Mischstufe zusammengefasst sind als erste Mischungskomponente gemäß Schritt b) bereitgestellt. Die zweite Mischungskomponente gemäß Schritt d) ist bei E1 durch die 40 phr NR bereitgestellt, die mit den Substanzen der ersten Mischstufe gemäß Schritt h) vermischt wird. In den 40 phr NR sind 0 Gew.-% der Füllstoffmenge enthalten. Im Anschluss an Schritt h) erfolgt dann die Zugabe der Vernetzungschemikalien zur Herstellung einer Kautschukfertigmischung.

Bei E2 wurden die Bestandteile wie sie oben in der Tabelle unter der ersten Mischstufe zusammengefasst sind als erste Mischungskomponente gemäß Schritt b) bereitgestellt. In einem zusätzlichen Schritt wurde diese Komponente nochmals durchmischt (zweite Mischstufe). Bei E2 wurde die zweite Kautschukmischungskomponente in Form von 40 phr NR und 0 Gew.-% der Füllstoffmenge in der finalen Mischstufe zusammen mit den Vernetzungschemikalien zu der ersten Komponente gegeben (Schritt g)) und damit vermischt (Schritt h)).

Die erfindungsgemäßen Beispiele E1 und E2 haben somit gemeinsam, dass ein Teil des Naturkautschuks zu einem späteren Zeitpunkt mit 0 Gew.-% Füllstoff zugegeben wurde. Sowohl bei E1 als auch bei E2 wurde die erste Mischungskomponente auf 80 °C durch Durchmischen vorgewärmt (im Mischer vorgelegt) bevor die 40 phr NR hinzugegeben wurden. Durch die auftretende Scherung und den Temperaturanstieg wurden die Viskositäten der ersten Komponenten jeweils verringert.

Die 40 phr NR wurden bei E1 und E2 jeweils auf 40 °C in einem Ofen vorgewärmt, wobei die zugegebenen Vulkanisationschemikalien nicht vorgewärmt wurden.

Wie in Tabelle 1 erkennbar, zeigen E1 und E2 einen geringeren Payne-Effekt, was an der geringeren Differenz zwischen G` bei 1 % Dehnung und 100 % Dehnung erkennbar ist; G` bei 1 % Dehnung ist ein Indikator für die Dispersion, insbesondere die Füllstoffdispersion, während G` bei 100 % Dehnung ein Indikator für den Polymerkettenabbau ist. Gleichzeitig weisen E1 und E2 höhere Steifigkeiten (M 300) auf.

Die in Tabelle 1 angegebenen Eigenschaften wurden mit folgenden Methoden ermittelt:
- Dynamischer Speichermodul (G' (1%), G'(100%)) aus RPA (= *engl.* "rubber process analyzer") in Anlehnung an ASTM D6601 vom zweiten Dehnungsdurchlauf bei 1 Hz und 70°C; G` bei 1 % minus G` bei 100 % (Subtraktion)
- Zugfestigkeit, Bruchdehnung sowie Spannungswert bei 100 % und 300 % Dehnung (M100 bzw. M300) bei Raumtemperatur gemäß DIN 53 504

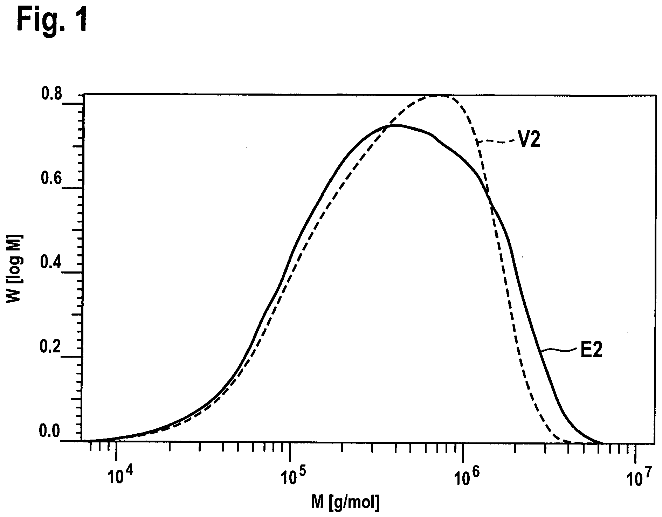

In Figur 1 sind die Molekulargewichtsverteilungen für die Beispiele V2 und E2 abgebildet. Wie anhand von Fig. 1 erkennbar, sind in E2 noch mehr Polymerketten mit einem höheren Molekulargewicht enthalten als bei V2. Somit wurden in E2 im Vergleich zu V2 durch das erfindungsgemäße Verfahren mehr Polymerketten vor dem Abbau geschützt.

Die Messung der Molekulargewichtsverteilung, die der Fig. 1 zugrunde liegt, erfolgte gemäß GPC (Gelpermeationschromatographie) aus den Fertigmischungen V2 und E2. Hierbei wurden jeweils 29 Gew.-% der Mischungen in Lösung gebracht.

Die GPC-Messung erfolgt in Anlehnung an die Normen DIN 55672-1 (Gel permeation chromatography (GPC) - Part 1: Tetrahydrofuran (THF) as elution solvent) und ISO 11344 (Rubber, raw synthetic - Determination of the molecular-mass distribution of solution polymers by gel permeation chromatography) bei 45 °C.

Als Lösemittel und als Elutionsmittel wird THF verwendet.

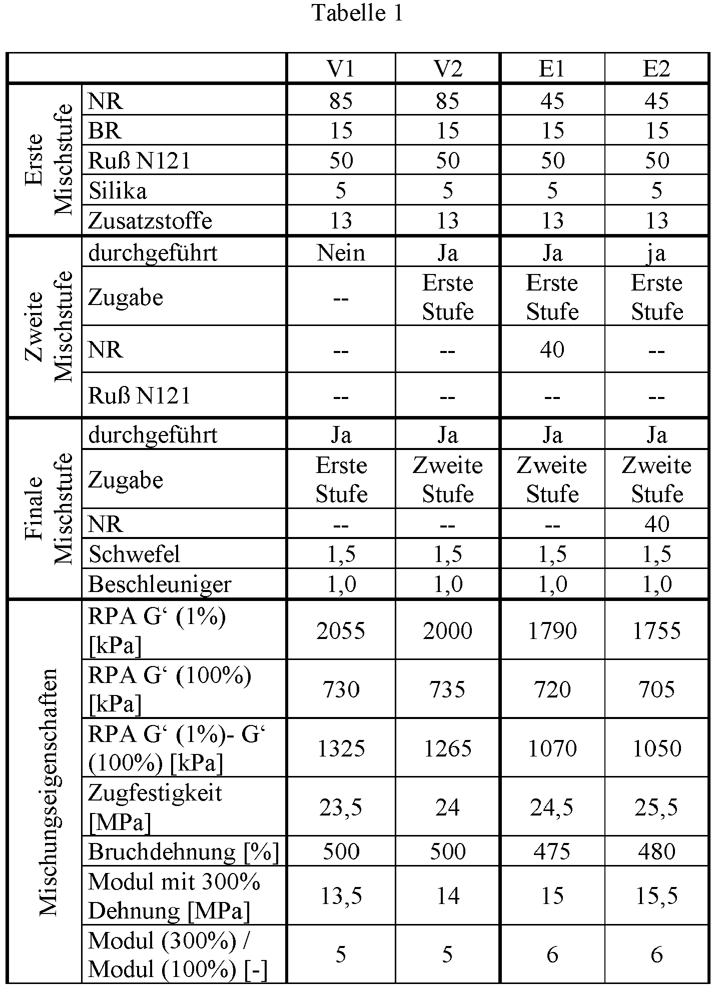

## Patentansprüche

1. Verfahren zur Herstellung einer Füllstoff-haltigen Kautschukmischung mit einer Gesamtfüllstoffmenge, wobei es wenigstens folgende Verfahrensschritte umfasst:
a) Bereitstellen eines Kautschuks A;
b) Vermischen von 60 bis 100 Gew.-% der Gesamtfüllstoffmenge in dem Kautschuk A aus Schritt a) zur Herstellung einer ersten Kautschukmischungskomponente,
c) Bereitstellen einer separaten Masse des gleichen Kautschuks A;
d) Vermischen von 0 bis 40 Gew.-% der Füllstoffmenge in dem Kautschuk A aus Schritt c) zur Herstellung einer zweiten Kautschukmischungskomponente, wobei im Fall von 0 Gew.-% der Füllstoffmenge die Kautschukmischungskomponente zumindest den Kautschuk umfasst;
e) Vorlegen der ersten Mischungskomponente in einer Mischvorrichtung;
f) Erwärmen der ersten Mischungskomponente, bevorzugt auf eine Temperatur von 80 bis 140 °C;
g) Zugabe der zweiten Mischungskomponente zu der ersten Mischungskomponente aus Schritt f);
h) Vermischen der ersten und der zweiten Kautschukmischungskomponenten.

2. Verfahren nach Anspruch 1, **dadurch gekennzeichnet, dass** der Kautschuk A ein Dienkautschuk ist, der bevorzugt ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR), emulsionspolymerisiertem Styrol-Butadien-Kautschuk (ESBR), Butylkautschuk (IIR) und Halobutylkautschuk.

3. Verfahren nach einem der vorherigen Ansprüche, **dadurch gekennzeichnet, dass** der Kautschuk A natürliches Polyisopren (NR; Naturkautschuk) ist.

4. Verfahren nach einem der vorherigen Ansprüche, **dadurch gekennzeichnet, dass** der Kautschukmischung, insbesondere in den Schritten b) und/oder d) und/oder h) wenigstens ein weiterer Kautschuk B, bevorzugt wenigstens ein Dienkautschuk, besonders bevorzugt Butadien-Kautschuk (BR), lösungspolymerisiertem Styrol-Butadien-Kautschuk (SSBR) und/oder emulsionspolymerisiertem Styrol-Butadien-Kautschuk (ESBR) zugegeben wird.

5. Verfahren nach einem der vorherigen Ansprüche, **dadurch gekennzeichnet, dass** die erste Kautschukmischungskomponente 25 bis 75 phr des Kautschuks A umfasst, wobei 100 phr 100 Gew.-% aller in der Kautschukmischung vorhandenen Kautschuke nach Schritt h) bedeuten.

6. Verfahren nach einem der vorherigen Ansprüche, **dadurch gekennzeichnet, dass** Schritt h) die letzte Mischstufe der Kautschukmischung darstellt.

7. Verfahren nach einem der vorherigen Ansprüche, **dadurch gekennzeichnet, dass** der Füllstoff ein verstärkender Füllstoff ist, der bevorzugt ausgewählt ist aus der Gruppe bestehend aus Rußen und Kieselsäuren.

8. Verfahren nach einem der vorherigen Ansprüche, **dadurch gekennzeichnet, dass** die in Schritt b) 100 Gew.-% der Füllstoffmenge verwendet werden, womit in Schritt d) 0 Gew.-% der Füllstoffmenge verwendet werden.

9. Verfahren nach einem der Ansprüche 1 bis 8, **dadurch gekennzeichnet, dass** in Schritt b) 60 bis 99 Gew.-%, bevorzugt 60 bis 90 Gew.-%, besonders bevorzugt 60 bis 80 Gew.-%, der Füllstoffmenge verwendet werden.

10. Verfahren nach einem der vorherigen Ansprüche, **dadurch gekennzeichnet, dass** ein Füllstoff und eines oder mehrere für diesen Füllstoff geeignete Kupplungsagenzien im gleichen Verfahrensschritt zugegeben werden.

11. Verfahren nach einem der vorherigen Ansprüche, **dadurch gekennzeichnet, dass** das Erwärmen in Schritt f) durch intensives Durchmischen erfolgt.

12. Verfahren nach einem der vorherigen Ansprüche, **dadurch gekennzeichnet, dass** es in einer Aggregatkombination aus einem Stempelkneter und einem darunter angeordneten stempellosen Kneter durchgeführt wird, wobei der stempellose Kneter bevorzugt ein Arbeitsvolumen aufweist, das um 70 bis 200 % größer ist als das des Stempelkneters, wobei die Schritte g) und h) in dem stempellosen Kneter stattfinden.

13. Füllstoff-haltige Kautschukmischung, hergestellt durch ein Verfahren nach einem der Ansprüche 1 bis 12.

## Claims

1. Process for producing a filler-containing rubber mixture comprising a total filler amount, wherein it comprises at least the following process steps:
a) providing a rubber A;
b) mixing 60% to 100% by weight of the total filler amount in the rubber A from step a) to produce a first rubber mixture component;
c) providing a separate mass of the same rubber A;
d) mixing from 0% to 40% by weight of the filler amount in the rubber A from step c) to produce a second rubber mixture component, wherein in the case of 0% by weight of the filler amount the rubber mixture component comprises at least the rubber;
e) initially charging the first mixture component in a mixing apparatus;
f) heating the first mixture component, preferably to a temperature of 80°C to 140°C;
g) adding the second mixture component to the first mixture component from step f);
h) mixing the first and the second rubber mixture components.

2. Process according to Claim 1, **characterized in that** the rubber A is a diene rubber which is preferably selected from the group consisting of natural polyisoprene (NR), synthetic polyisoprene (IR), butadiene rubber (BR), solution-polymerized styrene-butadiene rubber (SSBR), emulsion-polymerized styrene-butadiene rubber (ESBR), butyl rubber (IIR) and halobutyl rubber.

3. Process according to any of the preceding claims, **characterized in that** the rubber A is natural polyisoprene (NR; natural rubber).

4. Process according to any of the preceding claims, **characterized in that** the rubber mixture, in particular in steps b) and/or d) and/or h), is admixed with at least one further rubber B, preferably at least one diene rubber, particularly preferably butadiene rubber (BR), solution-polymerized styrene-butadiene rubber (SSBR) and/or emulsion-polymerized styrene-butadiene rubber (ESBR).

5. Process according to any of the preceding claims, **characterized in that** the first rubber mixture component comprises 25 to 75 phr of the rubber A, wherein 100 phr is to be understood as meaning 100% by weight of all rubbers present in the rubber mixture after step h).

6. Process according to any of the preceding claims, **characterized in that** step h) represents the last mixing stage of the rubber mixture.

7. Process according to any of the preceding claims, **characterized in that** the filler is a reinforcing filler which is preferably selected from the group consisting of carbon blacks and silicas.

8. Process according to any of the preceding claims, **characterized in that** 100% by weight of the filler amount is employed in step b) and thus 0% by weight of the filler amount is employed in step d).

9. Process according to any of Claims 1 to 8, **characterized in that** 60% to 99% by weight, preferably 60% to 90% by weight, particularly preferably 60% to 80% by weight, of the filler amount is employed in step b).

10. Process according to any of the preceding claims, **characterized in that** a filler and one or more coupling agents suitable for this filler are added in the same process step.

11. Process according to any of the preceding claims, **characterized in that** the heating in step f) is effected by intensive commixing.

12. Process according to any of the preceding claims, **characterized in that it** is performed in an combined assembly of a ram kneader and a ramless kneader arranged therebelow, wherein the ramless kneader preferably has an operating volume which is 70% to 200% greater than that of the ram kneader, wherein steps g) and h) are carried out in the ramless kneader.

13. Filler-containing rubber mixture produced by a process according to any of Claims 1 to 12.

## Revendications

1. Procédé de préparation d'un mélange de caoutchouc contenant une charge, comportant une quantité totale de charge, qui comprend au moins les étapes de procédé suivantes :
a) fourniture d'un caoutchouc A ;
b) mélange de 60 à 100 % en poids de la quantité totale de charge dans le caoutchouc A de l'étape a) pour la préparation d'un premier composant de type mélange de caoutchouc ;
c) fourniture d'une masse distincte du même caoutchouc A ;
d) mélange de 0 à 40 % de la quantité de charge dans le caoutchouc A de l'étape c) pour la préparation d'un deuxième composant de type mélange de caoutchouc, dans lequel, dans le cas de 0 % en poids de la quantité de charge, le composant de type mélange de caoutchouc comprend au moins le caoutchouc ;
e) chargement du premier composant de mélange dans un dispositif de mélange ;
f) chauffage du premier composant de mélange, préférablement à une température de 80 à 140 °C ;
g) ajout du deuxième composant de mélange au premier composant de mélange de l'étape f) ;
h) mélange du premier et du deuxième composant de type mélange de caoutchouc.

2. Procédé selon la revendication 1, **caractérisé en ce que** le caoutchouc A est un caoutchouc de diène, qui est préférablement choisi dans le groupe constitué par un polyisoprène naturel (NR), un polyisoprène synthétique (IR), un caoutchouc de butadiène (BR), un caoutchouc de styrène-butadiène polymérisé en solution (SSBR), un caoutchouc de styrène-butadiène polymérisé en émulsion (ESBR), un caoutchouc de butyle (HR) et un caoutchouc d'halogénobutyle.

3. Procédé selon l'une quelconque des revendications précédentes,
**caractérisé en ce que** le caoutchouc A est un polyisoprène naturel (NR ; caoutchouc naturel).

4. Procédé selon l'une quelconque des revendications précédentes,
**caractérisé en ce qu'**au moins un caoutchouc supplémentaire B, préférablement au moins un caoutchouc de diène, particulièrement préférablement un caoutchouc de butadiène (BR), un caoutchouc de styrène-butadiène polymérisé en solution (SSBR) et/ou un caoutchouc de styrène-butadiène polymérisé en émulsion (ESBR), est ajouté au mélange de caoutchouc, en particulier dans les étapes b) et/ou d) et/ou h).

5. Procédé selon l'une quelconque des revendications précédentes,
**caractérisé en ce que** le premier composant de type mélange de caoutchouc comprend 25 à 75 phr du caoutchouc A, 100 phr signifiant 100 % en poids de tous les caoutchoucs présents dans le mélange de caoutchouc après l'étape h).

6. Procédé selon l'une quelconque des revendications précédentes,
**caractérisé en ce que** l'étape h) représente le dernier stade de mélange du mélange de caoutchouc.

7. Procédé selon l'une quelconque des revendications précédentes,
**caractérisé en ce que** la charge est une charge renforçante, qui est préférablement choisie dans le groupe constitué par des suies et des acides siliciques.

8. Procédé selon l'une quelconque des revendications précédentes,
**caractérisé en ce que** les 100 % de la quantité de charge sont utilisés dans l'étape b), ce qui fait que 0 % en poids de la quantité de charge est utilisé dans l'étape d).

9. Procédé selon l'une quelconque des revendications 1 à 8, **caractérisé en ce que** dans l'étape b) 60 à 99 % en poids, préférablement 60 à 90 % en poids, particulièrement préférablement 60 à 80 % de la quantité de charge sont utilisés.

10. Procédé selon l'une quelconque des revendications précédentes, **caractérisé en ce qu'**une charge et un ou plusieurs réactifs de couplage appropriés pour cette charge sont ajoutés dans la même étape de procédé.

11. Procédé selon l'une quelconque des revendications précédentes,
**caractérisé en ce que** le chauffage dans l'étape f) est réalisé par brassage intensif.

12. Procédé selon l'une quelconque des revendications précédentes,
**caractérisé en ce qu'**il est réalisé dans une unité combinée composée d'un malaxeur à piston et d'un malaxeur sans piston disposé au-dessous de celui-ci, le malaxeur sans piston présentant préférablement un volume de travail qui est 70 à 200 % plus grand que celui du malaxeur à piston, les étapes g) et h) ayant lieu dans le malaxeur sans piston.

13. Mélange de caoutchouc contenant une charge préparé par un procédé selon l'une quelconque des revendications 1 à 12.
